# FASCICULE DE BREVET EUROPEEN

(11) **EP 1 951 569 B1**
(45) Date de publication et mention de la délivrance du brevet: **01.04.2009**
(21) Numéro de dépôt: 06807601.7
(22) Date de dépôt: 27.10.2006
(51) Int. Cl.: B64C 25/14, B64C 1/00

(54) **CASE DE TRAIN A STRUCTURE EN CAISSONS**
MIT EINER KASTENSTRUKTUR VERSEHENES FAHRWERKGEHÄUSE
LANDING GEAR CASING PROVIDED WITH A BOX STRUCTURE

(30) Priorité: 21.11.2005 FR 0553536
(43) Date de publication de la demande: 06.08.2008
(73) Titulaire: AIRBUS France, 31060 Toulouse Cédex (FR)
(72) Inventeur: DE RUFFRAY, Paul, F-31100 Toulouse (FR); MOREL, Rodolphe, F-31300 Toulouse (FR)
(74) Mandataire: Schmit, Christian Norbert Marie
(86) Numéro de dépôt international: PCT/EP2006/067849
(87) Numéro de publication internationale: WO 2007/057288

(56) Documents cités:
- EP-A- 0 899 191
- EP-A- 0 980 822
- US-A- 3 405 893
- US-A- 5 100 083
- US-B1- 6 213 426

## Description

La présente invention concerne une case de train à structure en caissons pour atterrisseur rentrant d'aéronef.

Les cases de train d'aéronef ont pour fonction de recevoir les trains d'atterrissage et de séparer le volume interne de l'aéronef souvent pressurisé de l'extérieur.

Du fait des efforts qu'elles subissent, efforts sol transmis par le train lors de l'atterrissage, efforts de compression dus à la pressurisation interne, et du fait qu'elles doivent recevoir le train en position rentrée, les cases de train de l'art antérieur comportent des cadres de renforts en forme d'arches, prolongeant des éléments de cadres du fuselage, répartis longitudinalement le long de la case et entourant la case de train. Les cadres de renfort raidissent des panneaux de la case de train en sorte de former des panneaux plans raidis.

Ces panneaux de l'art antérieur, comme par example ceux montrés par EP-A-0 899 191, reçoivent les paliers atterrisseurs et assurent l'étanchéité de la zone de la case de train. Cette construction rend les cases de train volumineuses et massives.

La présente invention (comme définie par les caractéristiques de la revendication 1) a pour but de réaliser une case de train de volume réduit, optimisée pour répondre aux deux types de sollicitations, efforts sol et pressurisation, et propose pour ce faire une case de train de volume réduit pour atterrisseur d'aéronef qui comprend une structure en caissons sur laquelle est réalisée la fixation de l'atterrisseur et la reprise des efforts subis par l'atterrisseur.

Avantageusement, la case de train comporte une structure enveloppe rapportée sur la structure en caissons pour reprendre les efforts de pressurisation.

Les caissons réalisant la structure en caissons sont concentrés autant que possible en bord de trappes.

Dans ce cadre, la présente invention est particulièrement adaptée à des atterrisseurs dont les paliers sont situés au plus près de la peau du fuselage.

Pour de tels atterrisseurs, la structure en caissons permet un gain important en encombrement. Notamment, pour les atterrisseurs de train avant à contrefiche télescopique de poussée, le fait que les paliers de l'atterrisseur soient disposés à proximité de la peau du fuselage permet de limiter l'encombrement de l'atterrisseur en position rentrée.

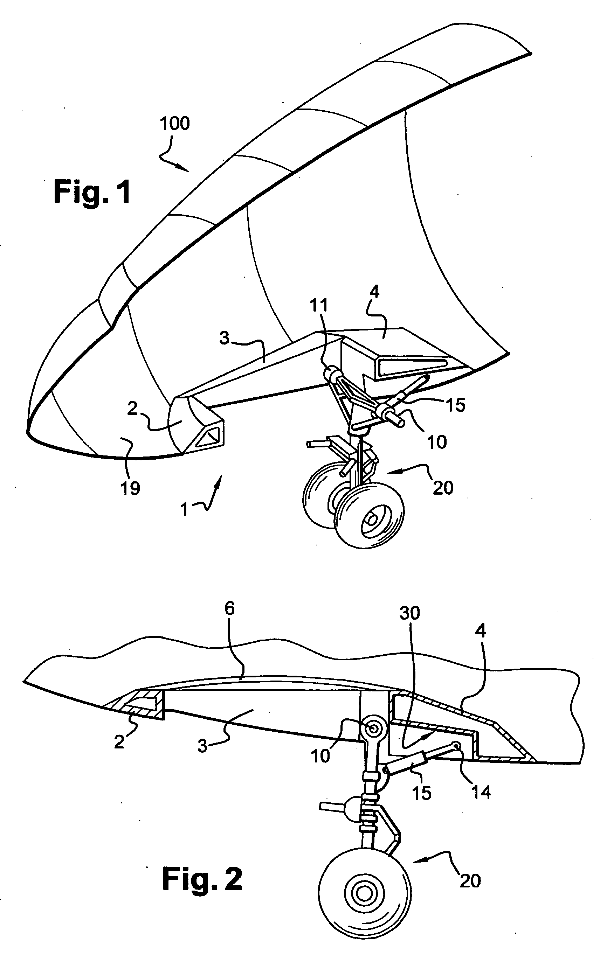

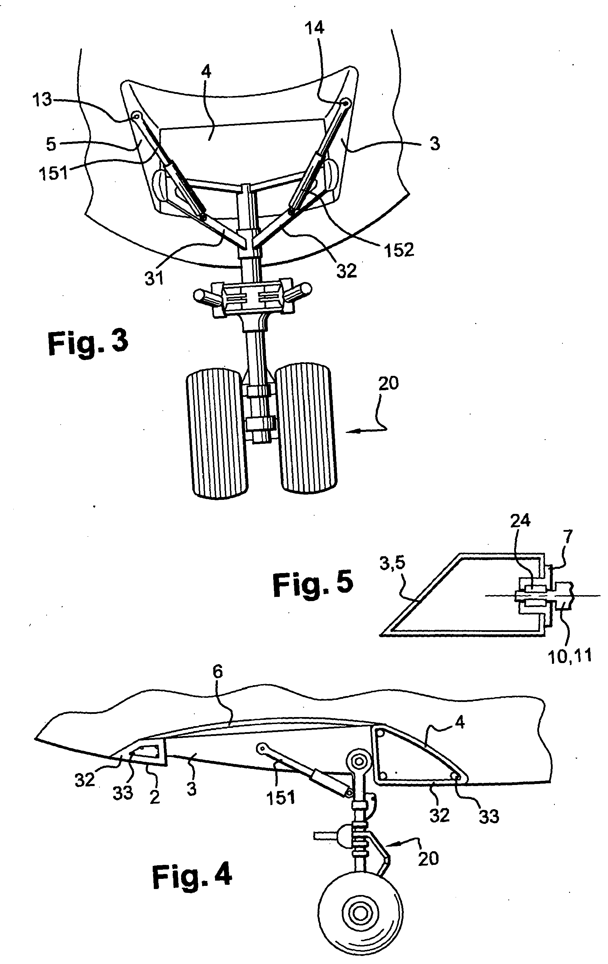

D'autres caractéristiques et avantages de l'invention seront mieux compris à la lecture de la description qui va suivre d'exemples de réalisation de l'invention non limitatifs en référence aux figures qui représentent:
En figure 1: une section de nez d'aéronef vue en perspective-coupe équipée d'une case de train selon l'invention;
en figure 2: une vue de côté en coupe de la case de train de la figure 1;
en figure 3: une vue de face en perspective d'un mode de réalisation de case de train alternatif selon l'invention;
en figure 4: une vue de côté en coupe de la case de train de la figure 1 adaptée pour l'atterrisseur de la figure 3;
en figure 5: un détail de réalisation en coupe d'un moyen de réception d'un palier conforme à l'invention;

La case de train 1 selon l'invention représentée en figure 1 est une case de train de volume réduit recevant un atterrisseur 20 d'aéronef 100.

L'atterrisseur représenté est un atterrisseur avant reçu sous le nez de l'aéronef 100, c'est à dire dans une partie de l'aéronef de dimensions réduites et comportant de nombreux équipements;

il est particulièrement avantageux de réduire le volume et la masse de la case de train dans cette partie de l'aéronef ce que permet l'invention qui propose une structure de case de train de faible encombrement.

L'aéronef dont le nez est équipé d'une case de train selon l'invention peut en particulier recevoir des équipements supplémentaires, l'arrangement et l'accessibilité de ces équipements étant en outre plus aisée.

Comme représenté en figure 1, la case de train de l'invention comprend une structure en caissons 2, 3, 4, 5.

La fixation de l'atterrisseur 20 est réalisée sur cette structure qui reprend les efforts subis par l'atterrisseur.

La structure en caissons comporte un caisson avant 2, dont un tronçon est représenté en figure 1, formant une traverse avant de la case de train 1, des caissons latéraux 3, 5, formant les flancs latéraux de la case de train 1 et un caisson arrière 4, formant une traverse arrière de la case de train 1.

Les caissons 2, 3, 4, 5 sont profilés pour réaliser une transition douce avec la structure du fuselage et pour accroître leur rigidité.

Ces caissons peuvent être réalisés en matériau léger tels que de l'aluminium à partir de panneaux raidis assemblés ou préférablement, dans le cas d'un aéronef à structure composite, les caissons de la structure en caisson peuvent être réalisés en matériaux composites, notamment par drapage de tissu composite 32 sur des armatures 33 formant raidisseurs.

La structure en caissons de l'invention est particulièrement adaptée pour permettre de disposer les paliers de fixation des atterrisseurs au plus près de la peau 19 de l'aéronef afin de réduire encore plus le volume pris par la case de train en hauteur dans l'aéronef.

Pour permettre la fixation de l'atterrisseur 20, la structure en caissons comporte des moyens de réception des paliers 10, 11 de fixation de l'atterrisseur.

La figure 5 donne un exemple de réalisation d'un tel moyen constitué par exemple d'un insert 7 assujetti au caisson latéral 3, 5 et recevant un roulement ou une bague 24 pour un palier 10, 11 d'atterrisseur.

En outre, la case de train selon l'invention est particulièrement adaptée à être utilisée en combinaison avec un atterrisseur 20 comportant au moins une contrefiche télescopique 15, 151, 152, la structure en caissons comportant des moyens de réception de paliers 13, 14 de ladite contrefiche à proximité de la peau du fuselage, ces moyens pouvant être identiques aux moyens de réception des paliers d'atterrisseur.

En particulier, dans le cas d'une contrefiche télescopique arrière 15, selon l'exemple des figures 1 et 2, le caisson arrière 4 est pourvu d'un logement 30, dans lequel se déploie la contrefiche 15, les parois latérales de ce logement 30 recevant un ou deux paliers de la contrefiche 15.

Selon les exemples des figures 3 et 4, l'atterrisseur comporte deux contrefiches télescopiques avant 151, 152 disposées diagonalement par rapport à l'atterrisseur et raccordées à des barres de renfort 31, 32 de l'atterrisseur.

Ces contrefiches diagonales sont pourvues chacune d'un palier 13, 14, les paliers de ces contrefiches sont comme les paliers de l'atterrisseur reçus dans les caissons latéraux 3, 5.

La case de train selon l'invention comporte avantageusement une structure enveloppe 6, rapportée sur la structure en caissons, pour reprendre les efforts de pressurisation.

Cette enveloppe 6 est en particulier un capot de forme arrondie adaptée à la reprise de tels efforts.

Ainsi la case de train de la présente invention est pourvue d'une structure dissociée entre une partie structurale et une partie de protection de l'espace interne de l'aéronef.

Les caissons disposés autour de l'espace recevant l'atterrisseur constituent la partie structurale de la case de train en formant le cadre d'un châssis assurant la fixation et la reprise des efforts de l'atterrisseur alors que la structure enveloppe 6, rapportée sur le châssis, constitue la partie de protection de la structure et reprend les efforts de pressurisation.

L'invention n'est pas limitée aux exemples représentés et notamment les caissons peuvent être assemblés sous forme d'un cadre complet avant leur implantation dans la structure de l'aéronef et peuvent en outre recevoir les mécanismes d'ouverture et de fermeture de la case de train.

## Revendications

1. Case de train (1) de volume réduit pour atterrisseur (20) d'aéronef (100), **caractérisée en ce qu'**elle comprend une structure en caissons (2, 3, 4, 5) sur laquelle est réalisée la fixation de l'atterrisseur (20) et la reprise des efforts subis par l'atterrisseur.

2. case de train selon la revendication 1, **caractérisée en ce que** la structure en caissons comporte des moyens de réception de paliers (10, 11) de fixation de l'atterrisseur.

3. case de train selon la revendication 2, **caractérisé en ce que,** l'atterrisseur (20) comportant au moins une contrefiche télescopique (15, 151, 152), la structure en caissons comporte des moyens de réception de paliers (13, 14) de ladite contrefiche à proximité de la peau du fuselage.

4. case de train selon l'une des revendications précédentes, **caractérisée en ce que** la structure en caissons comporte un caisson avant (2) formant une traverse avant de la case de train (1).

5. case de train selon l'une des revendications précédentes, **caractérisée en ce que** la structure en caissons comporte des caissons latéraux (3, 5) formant les flancs latéraux de la case de train (1).

6. case de train selon l'une des revendications précédentes, **caractérisée en ce que** la structure en caissons comporte un caisson arrière (4) formant une traverse arrière de la case de train (1).

7. case de train selon la revendication 3 et 6, **caractérisée en ce que** ladite contrefiche est une contrefiche arrière (15) et **en ce que** le caisson arrière comporte un logement (30) de réception de cette contrefiche arrière (15).

8. case de train selon la revendication 3 et 6, **caractérisée en ce que** l'atterrisseur comporte deux contrefiches télescopiques avant (151, 152) pourvues chacune d'un palier (13, 14) reçu dans un caisson latéral (3, 5).

9. case de train selon l'une des revendications précédentes, **caractérisée en ce que** la structure en caisson est réalisée en matériaux composites par drapage de tissu (32) composite sur des armatures (33) formant raidisseurs.

10. case de train selon l'une des revendications précédentes, **caractérisée en ce que** la structure en caissons (2, 3, 4, 5) constitue le cadre d'un châssis assurant la fixation et la reprise des efforts de l'atterrisseur et formant la partie structurale de la case de train, une structure enveloppe (6), rapportée sur le châssis, constitue une partie de protection de la structure reprenant les efforts de pressurisation.

11. aéronef équipé d'une case de train selon l'une quelconque des revendications précédentes.

## Claims

1. Undercarriage compartment (1) of small volume for landing gear (20) of an aircraft (100), **characterised in that** it comprises a box structure (2, 3, 4, 5) on which the fixing of the landing gear (20) and the absorption of the forces incurred by the landing gear are effected.

2. Undercarriage compartment according to claim 1, **characterised in that** the box structure comprises means of receiving bearings (10, 11) for fixing the landing gear.

3. Undercarriage compartment according to claim 2, **characterised in that,** the landing gear (20) comprising at least one telescopic strut (15, 151, 152), the box structure comprises means of receiving bearings (13, 14) of said strut close to the skin of the fuselage.

4. Undercarriage compartment according to one of the preceding claims, **characterised in that** the box structure comprises a front box (2) forming a front cross-member of the undercarriage compartment (1).

5. Undercarriage compartment according to one of the preceding claims, **characterised in that** the box structure comprises lateral boxes (3, 5) forming the lateral flanks of the undercarriage compartment (1).

6. Undercarriage compartment according to one of the preceding claims, **characterised in that** the box structure comprises a rear box (4) forming a rear cross-member of the undercarriage compartment (1).

7. Undercarriage compartment according to claims 3 and 6, **characterised in that** said strut is a rear strut (15) and **in that** the rear box comprises a housing (30) for receiving this rear strut (15).

8. Undercarriage compartment according to claims 3 and 6, **characterised in that** the landing gear comprises two front telescopic struts (151, 152) each provided with a bearing (13, 14) received in a lateral box (3, 5).

9. Undercarriage compartment according to one of the preceding claims, **characterised in that** the box structure is produced from composite material by draping composite fabric (32) on frames (33) forming stiffeners.

10. Undercarriage compartment according to one of the preceding claims, **characterised in that** the box structure (2, 3, 4, 5) constitutes the frame of a chassis providing the fixing and absorption of the forces of the landing gear and forming the structural part of the undercarriage compartment, an envelope structure (6), attached to the chassis, constitutes a protection part for the structure absorbing the pressurisation forces.

11. Aircraft equipped with an undercarriage compartment according to any one of the preceding claims.

## Patentansprüche

1. Fahrwerksgehäuse (1) mit reduziertem Volumen für ein Fahrwerk (20) eines Flugzeugs (100), **dadurch gekennzeichnet, dass** es eine Kastenstruktur (2, 3, 4, 5) aufweist, auf der die Befestigung des Fahrwerks (20) angeordnet ist, und durch die die Weiterleitung der vom Fahrwerk aufgenommenen Kräfte erfolgt.

2. Fahrwerksgehäuse nach Anspruch 1, **dadurch gekennzeichnet, dass** die Kastenstruktur Mittel zur Aufnahme von Befestigungslagern (10, 11) des Fahrwerks aufweist.

3. Fahrwerksgehäuse nach Anspruch 2, **dadurch gekennzeichnet, dass** das Fahrwerk (20) mindestens eine teleskopische Strebe (15, 151, 152) aufweist und die Kastenstruktur Mittel zur Aufnahme der Lager (13, 14) der Strebe in der Nähe der Haut des Rumpfes aufweist.

4. Fahrwerksgehäuse nach einem der vorhergehenden Ansprüche, **dadurch gekennzeichnet, dass** die Kastenstruktur einen vorderen Kasten (2) aufweist, der eine vordere Traverse des Fahrwerksgehäuses (1) bildet.

5. Fahrwerksgehäuse nach einem der vorhergehenden Ansprüche, **dadurch gekennzeichnet, dass** die Kastenstruktur seitliche Kästen (3, 5) aufweist, die die seitlichen Flanken des Fahrwerksgehäuses (1) bilden.

6. Fahrwerksgehäuse nach einem der vorhergehenden Ansprüche, **dadurch gekennzeichnet, dass** die Kastenstruktur einen hinteren Kasten aufweist, der eine hintere Traverse des Fahrwerksgehäuses (1) bildet.

7. Fahrwerksgehäuse nach Anspruch 3 oder 6, **dadurch gekennzeichnet, dass** die Strebe eine hintere Strebe (15) ist, und dass der hintere Kasten ein Gehäuse (30) zur Aufnahme dieser hinteren Strebe (15) aufweist.

8. Fahrwerksgehäuse nach Anspruch 3 oder 6, **dadurch gekennzeichnet, dass** das Fahrwerk zwei vordere teleskopische Streben (151, 152) aufweist, die jeweils versehen sind mit einem Lager (13, 14), das im seitlichen Kasten (3, 5) aufgenommen ist.

9. Fahrwerksgehäuse nach einem der vorhergehenden Ansprüche, **dadurch gekennzeichnet, dass** die Kastenstruktur aus Kompositmaterialien hergestellt ist durch Auflegen von Kompositgewebe (32) auf Armierungen (33), die Versteifungen bilden.

10. Fahrwerksgehäuse nach einem der vorhergehenden Ansprüche, **dadurch gekennzeichnet, dass** die Kastenstruktur (2, 3, 4, 5) den Rahmen eines Chassis bildet, das die Befestigung und die Weiterleitung der Belastungen des Fahrweks sicherstellt und den strukturellen Teil des Fahrwerksgehäuses bildet, und eine auf dem Chassis angebrachte umhüllende Struktur (6) einen Schutzabschnitt der Struktur bildet, der die Kräfte des Druckausgleichs aufnimmt.

11. Flugzeug mit einem Fahrwerksgehäuse nach einem der vorhergehenden Ansprüche.
